# EUROPÄISCHE PATENTSCHRIFT

(11) **EP 1 399 335 B1**
(45) Veröffentlichungstag und Bekanntmachung des Hinweises auf die Patenterteilung: **08.08.2007**
(21) Anmeldenummer: 02753066.6
(22) Anmeldetag: 10.06.2002
(51) Int. Cl.: B60R 21/01, B60N 2/00

(54) **OPTISCHES SITZBELEGUNGSSENSORNETZ**
OPTICAL SEAT OCCUPATION SENSOR NETWORK
RESEAU DE DETECTEURS OPTIQUES CON U POUR IDENTIFIER L'OCCUPATION D'UN SIEGE

(30) Priorität: 27.06.2001 DE 10131080
(43) Veröffentlichungstag der Anmeldung: 24.03.2004
(73) Patentinhaber: DaimlerChrysler AG, 70327 Stuttgart (DE)
(72) Erfinder: BAUR, Richard, 85276 Pfaffenhofen (DE); HUBER, Hans-Peter, 89233 Neu-Ulm (DE); ZEEB, Eberhard, 89081 Ulm (DE)
(86) Internationale Anmeldenummer: PCT/EP2002/006298
(87) Internationale Veröffentlichungsnummer: WO 2003/002380

(56) Entgegenhaltungen:
- DE-A- 10 045 689
- DE-A- 19 754 166
- DE-A- 19 856 549

## Beschreibung

Die Erfindung betrifft ein Sensornetz nach dem Oberbegriff des Patentanspruchs 1 DE-19751677 A offenbart eine Sensoranordnung gemäß der Oberbegriff von Anspruch 1.

Die vorliegende Erfindung befaßt sich mit dem Problem, daß zur gezielten Auslösung eines Airbags im Fahrzeug die Kenntnis der auf dem Sitz liegenden Last sowie die Lastverteilung auf der Sitzfläche von Bedeutung ist. Je nach Gesamtgewicht des Insassen, sollte die Heftigkeit der Airbag-Explosion unterschiedlich erfolgen. Ist außerdem die Lastverteilung auf dem Sitz mit hoher Ortsauflösung bekannt, wird aus dieser auch eine Unterscheidung zwischen Gegenständen und Personen auf dem Sitz getroffen.

Zur Erkennung einer Sitzbelegung werden beispielsweise Sitzmatten verwendet, in die ein elektrisches Widerstandsnetzwerk integriert ist. Die Gewichtsinformation wird aus der Widerstandsänderung des Widerstandsnetzes ermittelt.

Ein Nachteil dieser Systeme ist, daß sie durch elektromagnetische Störeinflüsse, z.B. durch elektrostatische Entladungen, störanfällig sind. Außerdem ist sowohl die Gesamtgewichtsauflösung als auch die räumliche Auflösung der Gewichtsverteilung nicht ausreichend, um komplexe Airbagsysteme gezielt zu steuern.

Die Aufgabe der Erfindung besteht darin, ein Sensornetz für die Sitzbelegung anzugeben, mit dem eine gezielt steuerbare Auslösung eines Airbagsystems im Fahrzeug erfolgt.

Die Erfindung ist in Anspruch 1 beschrieben. Vorteilhafte Ausgestaltungen und Weiterbildungen sind den Unteransprüchen zu entnehmen.

Weiterhin ist vorteilhaft, daß bei einer Sitzbelegung mit einem Gegenstand (z.B. mit einem Kindersitz) eine Airbagauslösung gezielt verhindert werden kann. Befindet sich eine erwachsene Person auf dem Sitz, wird aus der Gewichtsverteilung auf dem Sitz wiederum auf ihre Position im Innenraum geschlossen und damit wird die Auslösung eines Multiairbagsystems gezielt gesteuert.

Die Erfindung wird anhand von Ausführungsbeispielen beschrieben unter Bezugnahme auf schematische Zeichnungen.

Fig. 1 zeigt ein optisches Sensornetz aus Mikrokrümmungssensoren.
Fig. 2 a, b, c zeigt ein optisches Sensornetz mit Bragg-Gitter Sensoren oder Sensoren, die auf eine Intensitätsänderung ansprechen.

Die Erfindung geht davon aus, daß als Sensorsystem ein faseroptisches Sensornetzwerk aus zumindest 2 Sensoren verwendet wird, das gegen elektromagnetische Störeinflüsse resistent ist. Auf Grund der Beschaffenheit der optischen Glas- oder Polymerlichtwellenleiter ist z.B. eine Integration des Netzwerkes in den Textilbezug des Sitzes oder in ein Kissen möglich.

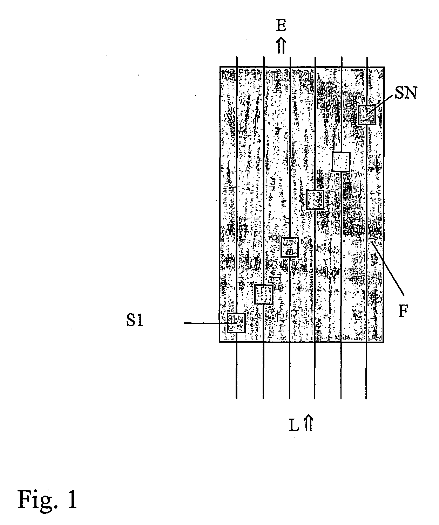

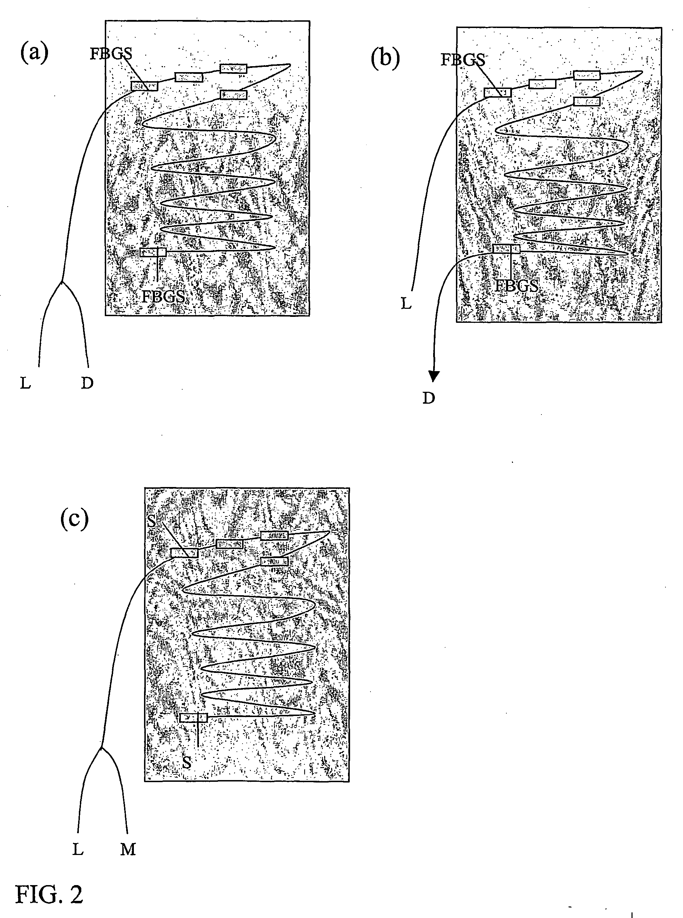

Es werden Sensoren verwendet, die z.B. durch Mikrokrümmungen verursachte lokale Dämpfungsänderungen in einem Fasernetzwerk oder durch Belastungen hervorgerufene Änderungen der Braggwellenlänge von faseroptischen Bragg-Gittersensoren (FBGS), die im Fasernetzwerk verteilt sind, registrieren.
Wird das Sensornetz aus Sensoren aufgebaut, deren Sensoreffekt durch Dämpfungseffekte hervorgerufen wird, ist eine räumliche Auflösung der Sitzbelastung durch getrenntes Auslesen der einzelnen Sensorzweige möglich. In Figur 1 ist beispielsweise ein optisches Sensornetz aus Mikrokrümmungsensoren S1 bis SN dargestellt. Für jeden Sensor führt eine Faserstrecke F zu einem individuellen Detektor in eine Detektorebene E. Die Einkopplung in verschiedene Sensorfaserstrecken erfolgt aus einer oder mehreren Lichtquellen L.
In einem weiteren Ausführungsbeispiel erfolgt die räumliche Auflösung für z.B. ein faseroptisches Bragg-Gittersensornetz gemäß Fig. 2a, b durch die Kaskadierung von z.B. verschiedenen Bragg-Gittersensoren FBGS mit unterschiedlichen Bragg-Wellenlängen. Die Kaskadierung der Sensoren reduziert die Anzahl der erforderlichen Detektoren E. Die Einkopplung des Lichts erfolgt durch eine Lichtquelle L.
Die Bragg-Gittersensoren werden entweder in Reflexion (Fig.2a) oder in Transmission (Fig.2b) betrieben.
Bei kaskadierend angeordneten Sensoren, die z.B. auf lokale Dämpfungsänderungen (Intensitätsänderungen) reagieren (Fig. 2c), erfolgt die räumliche Auflösung der Sitzbelastung durch ortsaufgelöste Dämpfungsmeßverfahren (OTDR). Das Licht wird durch eine Lichtquelle L eingekoppelt.
Durch die Kaskadenanordnung der Sensoren wird der Aufbau umfangreicher, komplexer Sensornetze erleichtert.

## Patentansprüche

1. Sensoranordnung zur Sitzbelegungserkennung mit einem faseroptischen Sensornetz mit zumindest zwei an verschiedenen Stellen der Sitzfläche angeordneten optischen Sensoren, wobei eine Auswertung der Lastverteilung des Sitzes anhand der Änderung der Sensorsignale erfolgt,
**dadurch gekennzeichnet,**
**dass** die Sensoren Bragg-Gittersensoren sind, die entweder in Reflexion oder in Transmission betrieben werden.

2. Anordnung nach Anspruch 1,
**dadurch gekennzeichnet,**
**dass** das optische Sensornetz aus Sensoren S1 bis SN aufgebaut ist, dass für jeden Sensor eine Faserstrecke F zu einem individuellen Detektor in eine Detektorebene E führt, dass die Einkopplung des Lichts in verschiedene Sensorfaserstrecken aus einer oder mehreren Lichtquellen L erfolgt, und dass eine Ausleseeinheit die räumliche Auflösung der Sitzbelastung durch getrenntes Auslesen der einzelnen Sensorzweige ermittelt.

3. Anordnung nach Anspruch 1,
**dadurch gekennzeichnet,**
**dass** die Sensoren kaskadenförmig angeordnet sind und die räumliche Auflösung der Sitzbelastung durch die Kaskadierung einzelner Sensoren erfolgt.

4. Anordnung nach einem der vorhergehenden Ansprüche 1 bis 3,
**dadurch gekennzeichnet,**
**dass** das Sensornetz in den Bezug des Sitzes eingewoben ist.

5. Anordnung nach einem der vorhergehenden Ansprüche 1 bis 3,
**dadurch gekennzeichnet, dass**
das Sensornetz in ein Sitzkissen integriert ist.

6. Sensoranordnung nach einem der vorstehenden Patentansprüche,
**dadurch gekennzeichnet,**
**dass** anhand der Lastverteilung eine Positionsbestimmung einer auf dem Sitz befindlichen Person erfolgt.

## Claims

1. Sensor arrangement for seat occupation detection, having a fibre-optical sensor network with at least two optical sensors which are arranged at different locations on the seat surface, wherein the load distribution of the seat is evaluated on the basis of the change of the sensor signals, **characterized in that** the sensors are Bragg grating sensors which are operated either in reflection or in transmission.

2. Arrangement according to Claim 1, **characterized in that** the optical sensor network is composed of sensors S1 to SN, **in that**, for each sensor, one fibre route F leads into a detector plane E to an individual detector, **in that** the light is injected into different sensor fibre routes from one or more light sources L, and **in that** a read-out unit determines the spatial resolution of the seat loading by separately reading out the individual sensor branches.

3. Arrangement according to Claim 1, **characterized in that** the sensors are arranged in the form of a cascade and the spatial resolution of the seat loading is effected by cascading individual sensors.

4. Arrangement according to one of the preceding Claims 1 to 3, **characterized in that** the sensor network is woven into the seat cover.

5. Arrangement according to one of the preceding Claims 1 to 3, **characterized in that** the sensor network is integrated into a seat cushion.

6. Sensor arrangement according to one of the preceding patent claims, **characterized in that** the position of a person on the seat is determined on the basis of the load distribution.

## Revendications

1. Arrangement de détection pour détecter l'occupation d'un siège comprenant un réseau de capteurs à fibres optiques avec au moins deux capteurs optiques disposés en différents endroits de la surface du siège, une interprétation de la répartition de la charge sur le siège étant réalisée au moyen de la modification des signaux des capteurs, **caractérisé en ce que** les capteurs sont des capteurs à grille de Bragg qui peuvent fonctionner soit en réflexion, soit en transmission.

2. Arrangement selon la revendication 1, **caractérisé en ce que** le réseau de détection optique est constitué des capteurs S1 à SN, **en ce que** pour chaque capteur une portion de fibres F mène à un détecteur individuel dans un plan de détecteur E, **en ce que** l'injection de la lumière dans les différentes portions de fibres de détection s'effectue depuis une ou plusieurs sources de lumière L et **en ce qu'**une unité de lecture détermine la résolution dans l'espace de la charge sur le siège par une lecture séparée de chacune des branches de détection.

3. Arrangement selon la revendication 1, **caractérisé en ce que** les capteurs sont disposés en cascade et la résolution dans l'espace de la charge sur le siège s'effectue par la mise en cascade des capteurs individuels.

4. Arrangement selon l'une des revendications 1 à 3, **caractérisé en ce que** le réseau de capteurs est entrelacé dans le revêtement du siège.

5. Arrangement selon l'une des revendications 1 à 3, **caractérisé en ce que** le réseau de capteurs est intégré dans un coussin du siège.

6. Arrangement selon l'une des revendications précédentes, **caractérisé en ce qu'**une détermination de la position d'une personne qui se trouve sur le siège est effectuée au moyen de la répartition de la charge.
